# EUROPEAN PATENT APPLICATION

(11) **EP 0 602 999 A1**
(43) Date of publication of application: **22.06.1994**
(21) Application number: 93310233.7
(22) Date of filing: 17.12.1993
(51) Int. Cl.: C04B 28/16

(54) **Mortar compositions and applications**

(30) Priority: 18.12.1992 GB 9226467; 02.12.1993 GB 9324747
(71) Applicant: BTR plc, London SW1P 2PL (GB)
(72) Inventor: Goslin, Michael David, Ripon, North Yorkshire HG5 9JN (GB); Dent, Henry, West Moor, Newcastle-upon-Tyne NE12 0EE (GB)
(74) Representative: Sparrow, Alvar Alfred

(57) **Abstract**

A mortar composition comprises preponderant proportions of anhydrite and particulate filler. The composition has extended handling times and shelf-life and produces hard fire-resistant products. Advantageous uses are as a one-coat plaster and as a fire penetration seal.

## Description

This invention relates to mortar compositions and applications thereof.

The present invention provides a mortar composition which has an extended handling period in an aqueous paste or slurry state, without detriment to the properties of the subsequently applied and set mortar product. The handling period is extendable owing to the composition of the invention possessing the advantageous characteristic of being retemperable over a long period of time by subjection of the paste or slurry to re-mixing, if necessary with addition of a small quantity of water.

Furthermore the present invention provides a mortar composition which has an extended shelf-life when stored in dry conditions.

The composition is found to be advantageous for surface plastering and fire barrier applications.

The composition in accordance with the invention comprises preponderant proportions of anhydrite and particulate filler.

According to the present invention also, there are provided advantageous applications of the composition as a one-coat plaster and as a fire-penetration seal, as described hereinafter.

The composition preferably contains anhydrite (anhydrous calcium sulphate) in an amount of at least 40%, e g 40-50%, by dry weight or volume. Preferably a synthetic anhydrite is employed.

The particulate filler suitably comprises fine stone particles such as crushed rock fines. Preferably limestone (calcium carbonate) fines are employed. The filler may be present in an amount of at least 40%, e g 40-55%, by dry weight of the composition.

Advantageously, one or more set accelerating aids are included in the composition. A suitable set accelerating aid is potassium sulphate or sodium sulphate. The amount of set accelerating aid may be, for instance, up to about 3% by dry weight of the composition.

Preferably the composition contains one or more ingredients which aid crystal growth in the composition during setting. Examples of crystal growth aids are hydrated calcium sulphates such as the dihydrate and hemihydrate. The amount of crystal growth aid may be, for instance, up to about 3%, e g 0.5-3%, by dry weight of the composition. A preferred crystal growth aid is calcium sulphate hemihydrate which preferably is present in an amount not greater than about 7% of the amount of anhydrite in the composition, by volume or weight. It is found that limitation of the proportion of hemihydrate in the composition is required for consistent reproduction of the setting time. Also, higher proportions of hemihydrate would increase the risk of flash-setting and may require the presence of a set-retardant additive, and furthermore would tend to reduce the shelf-life of the composition.

The composition may preferably contain one or more water retention aids, for example hydroxymethylcellulose. The amount of such an aid may be, for instance, up to about 1%, e g 0.01-1%, by dry weight of the composition.

If desired, especially when the composition is for an application in contact with the surface of a metal e g steel, the composition may contain calcium hydroxide or other corrosion inhibitor. The amount of such a corrosion inhibitor may be, for instance, up to about 10%, e g 0.5-10%, by dry weight of the composition.

One or more other substances which may be present as ingredients of the composition to enhance its performance and/or properties include:-
spreadability/workability aid, e g kaolinite which usually is in the form of clay such as ball clay or china clay, in an amount of, for instance, about 0.2-5%;
finishing aid, e g mica, in an amount of, for instance about 1-10%;
low density aggregate, e g ground perlite, especially expanded perlite, which may be included in the composition to enhance thermal insulation, in an amount of, for instance, up to about 20%, e g 1-20%;
reinforcing fibre, e g hydrophilic polypropylene fibres, in an amount of, for instance, up to about 2%;
resin binder, which may be included when a highly smooth finish is required, in an amount of, for instance, up to about 10%;
colouring pigment e g iron oxide or hydroxide, in an amount of, for instance, up to about 5%.

The percentages (%) referred to above are by dry weight of the composition.

The composition usually is prepared for transportation and storage as a dry particulate (powder) mix. A suitable particle size range may be of the order of up to about 3 mm.

It is found that the composition may have an extended shelf-life of six months or more, as compared to a shelf-life of about three months for most currently available plaster compositions for surface application, when stored in dry conditions.

When required for use, the dry mix is blended with water, preferably clean water, to produce a homogeneous paste or slurry having a working consistency. It is found that the working consistency can be maintained for an extended period of time, for instance about 2 hours, simply by subjecting the paste or slurry to re-mixing and, if necessary, adding supplementary water, up to about 45 minutes or more after initial production, without detriment to the mechanical and thermal properties of the product.

The aqueous composition may be applied by conventional mortar applying means and then allowed to set.

The applied composition generally has good vapour permeability for drying-out and sets to form a stable strong bond with a variety of material surfaces. It is found that the composition produces set products having desirable properties such as high impact-resistance, high durability, low density, smooth finish, a basic white colour, high insulation and high fire resistance.

By way of example, typical physical properties of an applied set mortar in accordance with the invention include the following:-
Set and air-dried dry density: 1000-1200 kg/m³;
Flexural strength (nominal) or modulus of rupture: mean 2.05 or 2.12 N/mm² (MPa);
Compressive strength (nominal); 5.0 or 5.1 N/mm² (MPa);
Impact strength (BS 1199 Part 1 Appendix D): 5.0 or 5.1 mm;
Vapour resistivity (nominal): 500 MNs/g.m;
Thermal conductivity: 0.289 W/mK at 3% moisture content;
Fire-resistance:
(1) Non-combustible as tested by BS 476 Part 4:1970;
(2) When one side of a 100 mm thick product was exposed to a typical fire situation in accordance with the temperature conditions of BS 476 Part 20:1987, the temperature rise at the other side was not more than 140°C on average and not more than 180°C at any point, and the product remained dimensionally stable.

The composition is especially suitable for internal (indoor) applications.

According to one preferred aspect of the present invention, it is found that a particularly advantageous application of the composition is as a one-coat plaster composition, i e a plaster composition which, when applied to a surface in a single coating operation, provides a surface plaster which, when set and dry, readily accepts decorative finishes such as paint and wallpaper.

The one-coat plaster composition may be applied, typically by trowelling, to building skin surfaces such as those of walls, ceilings, columns, partitions, etc. It is suitable for use on a wide range of material surfaces, for instance brickwork, concrete, stone, wood-wool slabs, wood lathing and metal lathing, and is compatible with most other plaster coatings. It may be used for original and replacement plastering and for repairing damaged internal surface coatings such as of plaster, mortar or concrete. It is suitable for use in a wide range of buildings, including residential, industrial, school, hospital, sports and leisure buildings. The plaster may be resin-bonded for applications such as in games rooms.

Although the composition is especially advantageous in respect of one-coat plaster compositions for internal use, alternatively the composition may be formulated to provide other types of plaster composition. For instance, a backing plaster composition normally would have a lower anhydrite content and would not contain a finishing aid such as mica, and a screed composition would contain a substantial proportion of coarse aggregate.

According to another preferred aspect of the present invention, it is found that a further particularly advantageous application of the composition is as a fire barrier, especially a fire penetration seal.

In structures such as buildings, it is often required for conduits, for example wires or cables for electric supply or telecommunication, pipelines for transmission of gas, water, steam, waste, etc, and air ducts, to pass through solid fire-resistant barrier sidewalls, ceilings or floors, hereinafter referred to as barrier(s). Usually the barrier opening which is provided or produced for through-passage of the conduit is larger than the external dimensions of the conduit and accordingly there is gap between the conduit and the periphery of the opening. Alternatively or additionally, when more than one conduit passes through a single opening, there may be a gap between the conduits. Alternatively or additionally a gap in the form of an opening may be provided or produced in a barrier for future passage of a conduit, and/or there may be one or more gaps elsewhere in the structure, for instance a gap between a barrier and a subsequently installed partition wall. Such gaps create a risk of heat, flame and other fire products traversing the barrier via the opening.

The present invention provides advantageous means for plugging such gaps to prevent transmission of fire products. Such plugging means may be referred to as fire penetration seals.

In accordance with the invention there is provided a fire barrier, especially a fire penetration seal, which comprises the product of setting an aqueous paste or slurry of the composition, and a method of providing a fire penetration seal for a gap in a structural barrier which comprises plugging the gap with an aqueous paste or slurry of the composition and allowing the composition to set in the gap.

The seal-forming composition may be produced in a pourable or spreadable consistency for maximum contact with the gap surfaces.

Shuttering may be employed during application of the seal-forming composition and/or during setting of the composition.

It is found that the composition sets and hardens without significant shrinkage occurring, thereby ensuring that the integrity of the seal is maintained. This advantage may be owing to counteraction of the shrinkage tendency resulting from evaporation of water, by expansion resulting from reaction between ingredients in the composition. Such expansion typically may be up to about 2% by volume, especially when a crystal growth aid such as a commercial grade of calcium sulphate hemihydrate is present.

The composition sets to form a stable strong bond with a variety of structural barrier material surfaces, often by means of chemical keying. For instance, the seal bonds strongly to metals such as steel and to common internal barrier materials e g brickwork (common and engineering) and concrete (porous and solid).

The seal is a rigid, hard, non-combustible mass which remains dimensionally stable when subjected to severe fire conditions. Its impact-resistant and load-bearing properties enable it to be resistant to damage by the point-pressure of access ladders and the like, and it is capable of providing a surface which is receptive to decoration or masking such as by means of paint or wallpaper.

The load-bearing capability of the seal may be increased by incorporation of reinforcement material such as metal reinforcement. For instance, one or more reinforcement members of steel, e g mild steel, may be incorporated. Such reinforcement may be desirable for seals of large surface area, and especially for seals in flooring. An example of a suitable reinforcement comprises steel rods and/or angle-irons embedded in the seal substantially parallel to the seal face and, preferably, substantially centrally of the seal thickness. As an alternative to employment of separate rods or angle-irons, a preformed mesh or grating reinforcement may be employed.

Examples of suitable reinforcement are shown below in Tables 1 and 2, in which:-
- Type A:: Reinforcement using mild steel angle 30 x 30 x 1.6 mm, or similar, spanning the shortest dimension at 900 mm centres or nearest.
- Type B:: Reinforcement using mild steel angle 30 x 30 x 1.6 mm, or similar, spanning the shortest dimension at 600 mm centres or nearest.
- Type C:: Reinforcement using mild steel rod of minimum 10 mm diameter spanning the shortest dimension at 250 mm centres or nearest.

**TABLE 1**

| FOR NON-LOAD BEARING SEAL | | | |
|---|---|---|---|
| WIDTH OF OPENING | LENGTH OF OPENING | PRIMARY REINFORCEMENT | SECONDARY REINFORCEMENT |
| Up to 600 mm | Up to 900 mm | None | None |
| Up to 600 mm | Over 900 mm | Type A | None |
| Over 600 mm | Over 900 mm | Type B | None |

**TABLE 2**

| FOR LOAD BEARING SEAL | | | |
|---|---|---|---|
| WIDTH OF OPENING | LENGTH OF OPENING | PRIMARY REINFORCEMENT | SECONDARY REINFORCEMENT |
| Up to 600 mm | Up to 900 mm | None | Type C |
| Up to 600 mm | Over 900 mm | Type A | Type C |
| Over 600 mm | Over 900 mm | Type B | Type C |

## Claims

1. Mortar composition comprising preponderant proportions of anhydrite and particulate filler.

2. Composition according to Claim 1 in which the anhydrite is present in an amount of at least 40% by dry weight.

3. Composition according to Claim 1 or 2 in which the particulate filler comprises fine stone particles such as limestone fines in an amount of at least 40% by dry weight.

4. Composition according to any of the preceding Claims containing a set accelerating aid such as potassium sulphate or sodium sulphate in an amount of up to about 3% by dry weight.

5. Composition according to any of the preceding Claims containing calcium sulphate hemihydrate in an amount of up to about 7% by weight based on the amount of anhydrite in the composition.

6. Composition according to any of the preceding Claims containing a water-retention aid such as hydroxymethylcellulose in an amount of up to about 1% by dry weight.

7. Composition according to any of the preceding Claims in the form of a dry mix of particles of sizes up to about 3 mm.

8. Application of a composition according to any of the preceding Claims as a one-coat plaster composition.

9. Fire barrier, especially a fire penetration seal, comprising the product of setting an aqueous paste or slurry of a composition according to any of Claims 1 to 7.

10. Method of providing a fire penetration seal for a gap in a structural barrier, comprising plugging the gap with an aqueous paste or slurry of a composition according to any of Claims 1 to 7 and allowing the composition to set.
